# EUROPEAN PATENT SPECIFICATION

(11) **EP 1 480 443 B1**
(45) Date of publication and mention of the grant of the patent: **04.03.2009**
(21) Application number: 04252892.7
(22) Date of filing: 19.05.2004
(51) Int. Cl.: H04N 1/32

(54) **Information processing system for determination of originality of contents data and method therefore**
Datenverarbeitungssystem für die Bestimmung der Originalität von Inhaltsdaten und Verfahren dafür
Système et méthode de traitement d'informations pour la détermination de l'authenticité de données de contenu

(30) Priority: 20.05.2003 JP 2003142404; 22.04.2004 JP 2004126846
(43) Date of publication of application: 24.11.2004
(73) Proprietor: CANON KABUSHIKI KAISHA, Ohta-ku, Tokyo (JP)
(72) Inventor: Igeta, Satoshi Canon Kabushiki Kaisha, Ohta-ku Tokyo (JP)
(74) Representative: Hitching, Peter Matthew

(56) References cited:
- EP-A- 1 001 601
- EP-A- 1 189 429
- EP-A- 1 278 363
- EP-A- 1 298 545

## Description

### FIELD OF THE INVENTION

The present invention relates to an information processing system, information processing apparatus, information processing method, storage medium for information processing apparatus-readably storing a program for practicing that method, and the program which can save contents data on a server connected by using a communication environment such as a network to make a user browse the contents data.

### BACKGROUND OF THE INVENTION

As the result of the improvement of the computer performance and application, a user can easily process contents data such as a still image or moving image at high quality.

Hence, when the user wants to use the contents data such as the still image or moving image for an investigation, since the contents data can be easily processed at high quality, the user needs to determine whether the contents data is processed data or an original sensed by a digital camera, digital video camera, portable phone with video camera, or the like before using the contents data. Additionally, in order to determine whether the contents data is processed data or an original, an advanced technology is required. Hence, the determination is difficult to be performed.

Under these circumstances, the following technique is implemented. When extracting the contents data such as the still image or moving image sensed by the digital camera, digital video camera, portable phone with video camera, or the like from these devices, information indicating that the contents data is an original is embedded on a device side. The image is input to a dedicated device or application to notify whether the image is a processed image.

However, in the prior art, whenever the user needs to determine whether the image is a processed image, the user needs to input the image to the dedicated device or application to receive the notification of the determination result. For example, even after a user determines whether the image is an original image, another user needs to receive the notification of the determination result by inputting the same image to the dedicated device or application again.

European Patent Specification No. EP-A-1298545 discloses a server apparatus which accepts the transfer of image data from a user who can access the apparatus through a network. The server apparatus can also limit image data whose transfer is accepted with various conditions.

### SUMMARY OF THE INVENTION

The present invention has been made in consideration of the conventional problem, and a concern of the present invention is to provide an information processing system, information processing apparatus, information processing method, storage medium for information processing apparatus-readably storing program for implementing that method, and the program in which a user who has saved contents data and a user who is permitted to browse the contents data can easily determine whether the contents data is processed data or an original without using a dedicated device or application in each environment.

Accordingly aspects of the present invention provide an information processing apparatus as set out in claim 1 and a method of processing information as set out in claim 2.

The present invention further provides a program executable in an information processing apparatus as set out in claim 6 and a storage medium as set out in claim 7.

In the present invention, each of the plurality of users who access the contents data needs not make the dedicated device or application determine whether the contents data is processed data or an original.

Also, in the present invention, the user can quickly and easily determine whether the contents data is processed data.

Also, the present invention can control whether the service for the contents data is provided in accordance with whether the contents data is processed data or an original.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

Fig. 1 is a schematic diagram showing the arrangement of the overall system of a connection relationship among a contents owning user, contents site which saves the contents, and print site which prints the contents in an embodiment;
Fig. 2 is a block diagram showing an example of the arrangement of a contents site in this embodiment;
Fig. 3 is a block diagram showing an example of the arrangement of hardware of the contents site in this embodiment;
Fig. 4 shows an image information data table managed in the contents site in this embodiment;
Fig. 5 is a flowchart showing the sequence of the process of a client PC and the contents site when referring to the saved data;
Fig. 6 is a flowchart showing the sequence of the determination process of the contents data in this embodiment;
Fig. 7 shows an example of a window in this embodiment;
Fig. 8 shows an example of a window in this embodiment; and
Fig. 9 shows a user data table managed in the contents site in this embodiment.

### DETAILED DESCRIPTION OF THE PREFERRED EMBODIMENT

A preferred embodiment of the present invention will be described below with reference to the accompanying drawings.

### <Outline of Arrangement and Operation of Service Providing System of This Embodiment>

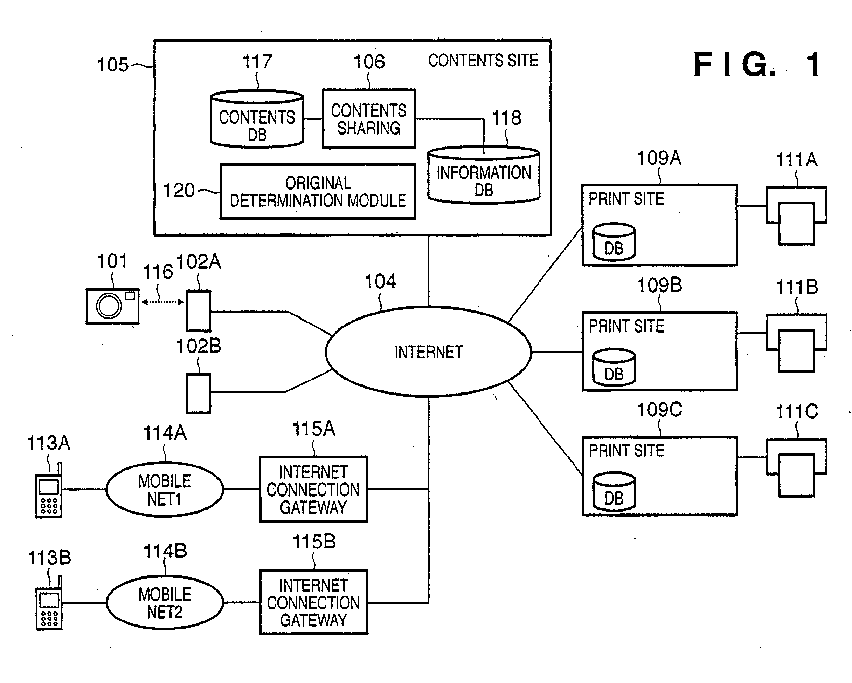

Fig. 1 shows an example of the arrangement of the overall system of a service according to this embodiment.

Reference numeral 101 denotes a contents input device. For example, the contents input device 101 includes a digital still camera that can sense a still image and can record it as image data, a digital video camera that can capture a moving image, and can record it as moving image data, and the like. The contents input apparatus 101 converts an optical image as image information into an electrical signal, executes a predetermined process, and then records/plays back the image as digital information. Alternatively, the contents input device 101 may be a recorder device which records audio and video data. The audio data, moving image data, still image data, video data, and the like will be referred to as contents data.

Reference numeral 102A denotes a user's personal computer (to be referred to as a user PC). Reference numeral 116 denotes a contents data transfer interface which is used to transfer contents data between the contents input device 101 and user PC 102A. The contents data transfer interface 116 may adopt either a wired interface represented by USB and IEEE1394, or a wireless interface represented by IrDA and Bluetooth.

The contents data which is sensed by the contents input device 101 and stored as digital information is transferred to a storage area of an information storage device such as an HDD of the user PC 102A via this contents data transfer interface 116.

As for contents data transfer from the contents input device 101 to the user PC 102A, contents data stored in the information storage device in the contents input device 101 are simultaneously transferred in accordance with a command from an OS or dedicated software installed in a user PC 102A, or the OS or dedicated software which runs on the user PC 102A assures a data recording area on an information recording unit of the user PC 102A and transfers contents data to that area. The user of the user PC 102A is referred to as an owner user hereinafter.

The contents input device 101 embeds determination data indicating that the contents data is an original in the contents data to be transferred. The determination data of this embodiment is generated by using a scheme such as a public key cryptography and secret key cryptography, or using a hash value indicating the characteristic of the contents data protected by a security scheme. However, the generation method is not limited to this. The determination data is added to the contents data by embedding the determination data by using a digital watermark technique, embedding the determination data in a space area such as an unused area of the contents data, adding the determination data to the header of the contents data, or the like. However, the method is not limited to this. Preferably, the adding method does not limit the use of the contents data.

### (Example of Contents Upload)

In this manner, the contents data with determination data transferred to the user PC 102A is uploaded to a contents site 105 connected to Internet 104 in the following sequence. The user PC 102A also includes contents data without the determination data. The contents data without the determination data is also uploaded to the contents site 105 in the same manner as the contents data with the determination data to be described below.

On the user PC 102A, a browser having a standard protocol which can transfer information via the Internet 104 accesses the contents site 105 by using a standard protocol such as an http protocol or the like. The browser displays information linked to information such as contents generated by a description language such as an HTML, XML, or the like managed by the server PC of the contents site 105.

With this operation, the user PC 102A can receive the service via the Internet 104 as a communication infrastructure provided by the contents site 105.

The contents data stored in the information storage unit of the user PC 102A is transferred to the contents site 105 in response to a user's request from the user PC 102A (this transfer will be referred to as contents upload hereinafter).

The contents upload method includes a method in which contents data to be transferred is selected from the aforementioned browser and is transferred in synchronism with a contents upload request action, and a method in which contents data is selected using contents upload dedicated software or the like, and is directly transferred from the aforementioned contents upload dedicated software.

Both these methods are practiced based on a protocol such as http, ftp, or the like which can be used on the Internet.

A contents sharing module 106 performs this sequential operation in the contents site 105.

It is then checked if the uploaded contents data is data that the contents site 105 can use in the contents sharing module 106. If it is determined that the contents site 105 can use the uploaded data, the uploaded contents are stored in a contents database 117, and the property information of the contents is stored in a database 118.

In this stage, the contents sharing module 106 notifies the user PC 102A that contents data has been successfully uploaded.

Other than the property information of the aforementioned contents data, the database 118 manages the user property information registered in the contents site 105, property information of the print service provider (to be referred to as a print site hereinafter) to which a printout request of the uploaded contents data is to be sent, and the like.

The contents data stored in the contents DB 117 is determined by an original determination module 120 whether the contents data is an original. Note that in this embodiment, the original determination module 120 exists in the contents site 105. However, the present invention is not limited to this. The original determination module 120 may exist outside the contents site 105, and be communicatively connected to the contents site 105 via the network.

The detail of this determination method will be described below.

### (Example of Browsing from PC)

The user PC 102A can develop and display the aforementioned uploaded contents data by the browser. Hence, the owner user can browse the uploaded contents data.

Note that as for this browse, the uploaded contents data may be simultaneously displayed as a folder in one unit.

A method that allows a user other than the owner user to browse the contents data which is uploaded to the contents site 105 and stored in the database 117 will be explained below.

By the owner user's operation, the user PC 102A notifies the contents site 105 of a name and email address of a user to whom the owner user grants a permission to browse (to be referred to as a browse user hereinafter) using the browser.

The contents site 105 generates a Universal Resource Locator (URL) corresponding to the contents data designated by the owner user.

At this time, a unique address which uses a random number or the like that cannot be uniquely estimated is assigned to the URL to be generated. An example of such URL is:
http://○○
○.com/ContentsSite/Entry.cgi?FolderID=AJNWDMF

The contents site 105 sends an email message including the URL generated in this way to the email address of the browse user via the Internet 104.

Upon receiving the operation of the browse user, the mailer of the user PC 102B receives and develops the email message from the contents site 105, and then displays the URL.

Upon receiving the operation of the browse user, the browser of the user PC 102B inputs the URL, accesses the contents site 105, and displays the contents or folder of the owner user.

Also, the contents site 105 can also provide browse notification and browse function services of contents (or folder) to the owner of a portable terminal 113 designated by the owner user.

In the above information providing system, the browse user to whom the owner user grants a permission to browse the contents or folder browses the contents data on the basis of the information (URL) received from the contents site 105.

Of course, in the service implemented by the system according to this embodiment, the owner user and the browser user can receive services such as print order of the contents data other than the above-described services.

Next, as an example, in the browse service implemented in the above-described system, the detail of an original determination service for determining whether the contents data of the owner user is processed data, i.e., whether the contents data of the owner user is an original will be described below.

### <Example of Arrangement of Contents Site of This Embodiment>

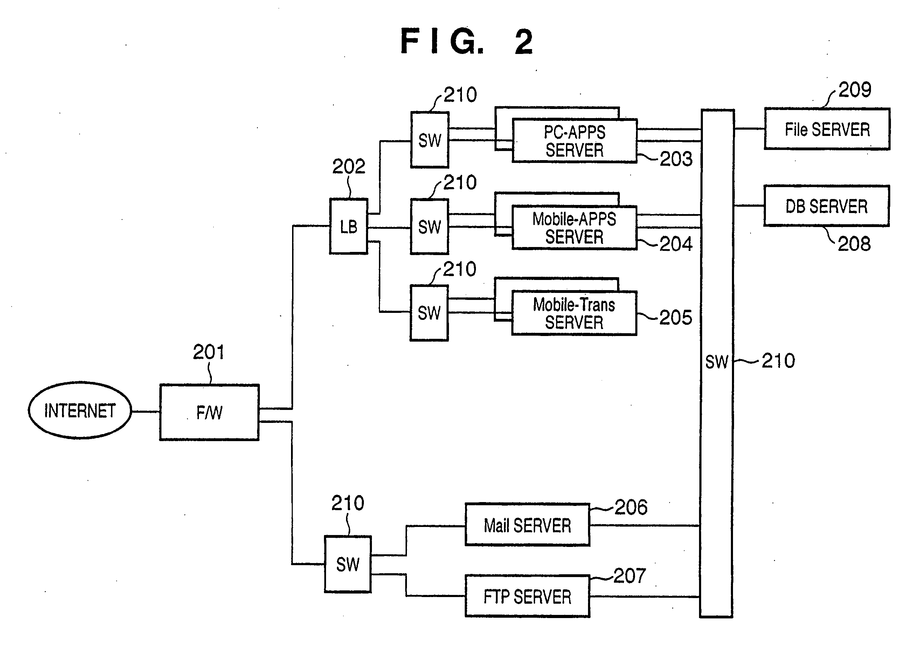

Fig. 2 shows an example of the arrangement of the contents site 105 of this embodiment.

The contents site 105 mainly comprises a firewall (F/W) 201, load balancer (LB) 202, application servers 203 and 204, contents conversion server 205, mail server 206, FTP server 207, database (DB) server 208, file server 209, and Ethernet® switch (SW) 210. Note that the contents database 117 and database 118 shown in Fig. 1 are operating under the DB server 208.

In the contents site 105, the firewall 201 has a function of, e.g., blocking external invasions and attacks. The firewall 201 is used to securely manage the servers on the intranet in the contents site 105.

The contents site 105 includes the PC application server 203 which provides services mainly to the PCs 102, and the mobile application server 204 which provides services to the portable terminals 113. These application servers serve as WWW servers. The application servers 203 and 204 acquire image information and user information, and generate pages in collaboration with the DB server 208 and file server 209 as needed.

The load balancer 202 is a load distribution device, and has a load distribution function that distributes accesses to the contents site 105 to a plurality of servers in the intranet. Also, the load balancer 202 has a function of acquiring terminal information of an access source, and discriminating if a browse request comes from the portable terminal 113 or PC 102. Based on this discrimination result, the load balancer 202 distributes a browse request from the PC 102 to the PC application server 203, and that from the portable terminal 113 to the mobile application server 204 via the contents conversion server 205.

The application server 203 manages a homepage of a net image save service corresponding to access from the PC 102. Also, the application server 203 provides user homepages for respective users, and allows these users to use an image upload service including image browse, password setup, browse notification mail services, and the like.

The mail server 206 sends a service registration confirmation mail message, image browse notification mail message, and the like to the users in accordance with instructions from the PC application server 203 or mobile application server 204.

The PC application server 203 or mobile application server 204 includes the contents sharing module. Since the CPU 301 (to be described later) executes the contents sharing module, the following various processes are performed.

The FTP server 207 receives images uploaded by the user using an ftp protocol. Image data received once are saved in the file server 209 which serves as a main storage.

### <Example of Hardware Arrangement of Contents Site of This Embodiment>

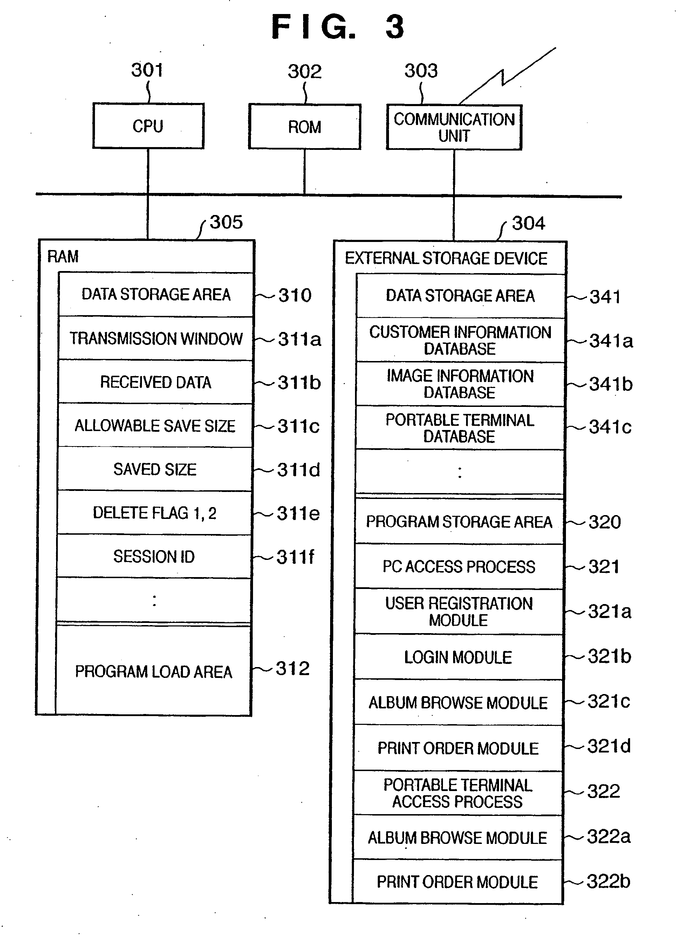

Fig. 3 shows an example of the hardware arrangement of the server device constituting the contents site 105 of this embodiment. Note that Fig. 3 shows the arrangement with focus on a control unit, but input/output devices and the like are omitted.

Reference numeral 301 denotes a Central Processing Unit (CPU) as a control device of Fig. 1, which controls the overall server device constituting the contents site 105. A Read Only Memory (ROM) 302 stores programs and parameters which need not be changed. A Random Access Memory (RAM) 305 provides storage areas for temporarily storing programs and data, and includes a data storage area 310 and program load area 312.

System programs such as an Operating System (OS), printer driver, and the like, or application programs provided by the user or the like are loaded from an external storage device 304 onto the program load area 312. The loaded programs are executed by the CPU 301.

On the data storage area 310, a transmission window 311a to be provided to a user's communication terminal, and generated to be displayed on the display of this communication terminal, received data 311b received from the user's communication terminal, an allowable save size 311c which is used to check if the image uploaded from the user can be saved, saved size 311d which is currently used to save the user's image, an area 311e that is used to store flags used in browsing from the portable terminal, a session ID 311f, and the like are assured as areas used in this embodiment.

An external storage device 304 includes a fixed hard disk or memory card, or a detachable and portable medium such as a floppy® disk, an optical disk such as a Compact Disk (CD) or the like, magnetic and optical cards, an IC card, a memory card, or the like. The external storage device 304 includes a data storage area 341 and program storage area 342.

The data storage area 341 stores a user information database 341a used to manage information of the user who requests to save the image data, an image information database 341b used to manage saved image information, a portable terminal database 341c used to manage information for portable terminals, and the like.

The program storage area 320 stores programs which are to be loaded onto the program load area 312 of the RAM 305 in execution (a program may be directly executed in, e.g., a memory card or the like). Although not shown in Fig. 3, the program storage area 320 also stores system programs such as an OS, BIOS, and the like used in this embodiment. In Fig. 3, a user registration module 321a, login module 321b, album browse module 321c, print order module 321d, and the like are stored as a program 321 for a PC access process. Furthermore, as a program 322 for a portable terminal access process, an album browser module 322a is stored.

Note that in an example of the hardware arrangement of the contents site 105, the hardware arrangement specifies as a single device. However, the servers shown in Fig. 2 may be present as independent devices, and are connected via a Local Area Network (LAN) or the like to form the system arrangement. Also, the storage unit (especially, the external storage device 304) may be distributed to a plurality of devices.

### <Example of Operation Sequence of Service Providing System of This Embodiment>

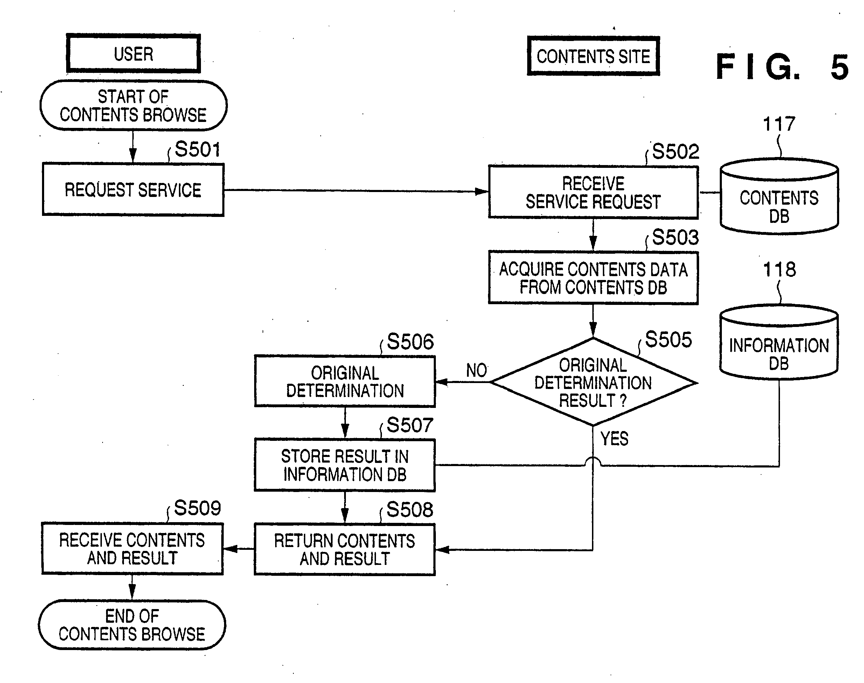

Fig. 5 is a flowchart showing the sequence of process between the user PC 102 and contents site 105 when the browse service of the contents data uploaded to the contents site 105 is executed. Note that the contents site 105 is processed by the plurality of servers and modules such as the PC application server 203 and the original determination module 120 which constitute the contents site 105.

In step S501, the browse service request of the contents data uploaded from the user PC 102A to the contents site 105 is transmitted from the user PC 102 to the contents site. At this time, although not shown, the information such as a password required for receiving the service as needed is input, and transmitted to the contents site 105. The service request includes a user ID which is uniquely defined for each user, and a contents ID which is uniquely defined for each contents data that user wants to browse. Note that this user PC 102 may be the user PC 102A of the owner user, or the user PC 102B of the browse user.

In step S502, the contents site 105 receives the browse service request and information required for providing a service from the user PC 102. When it is determined that the browse service of the contents data can be provided to the user PC 102, the flow advances to step S503. At this time, although not shown, when it is determined that the browse service of the contents data cannot be provided, the contents site 105 returns error information such as a caution to the user PC 102.

In step S503, the contents site 105 obtains the contents data from the contents database 117 on the basis of information such as the contents ID received in step S502.

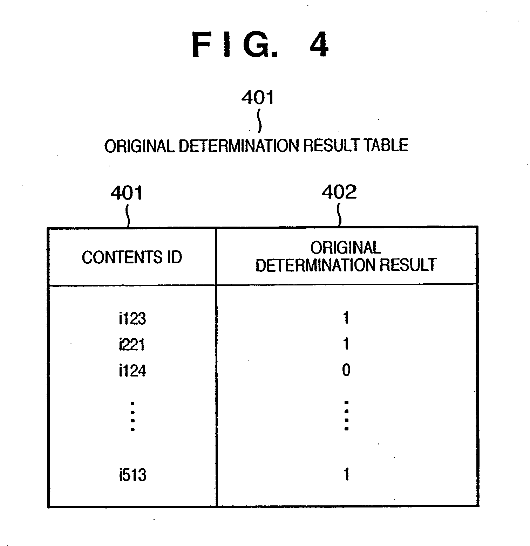

In step S505, the contents site 105 searches an original determination result table 400 (in Fig. 4) which is stored in the information database 118 based on the contents ID, and determines whether the original determination result of the requested contents data is present. When the contents site 105 determines that the original determination result is absent, the flow advances to step S506. When the contents site 105 determines that the original determination result is present, the flow advances to step S508.

In the original determination result table 400 in Fig. 4, a result 402 of the past original determination is managed together with a contents data ID 401.

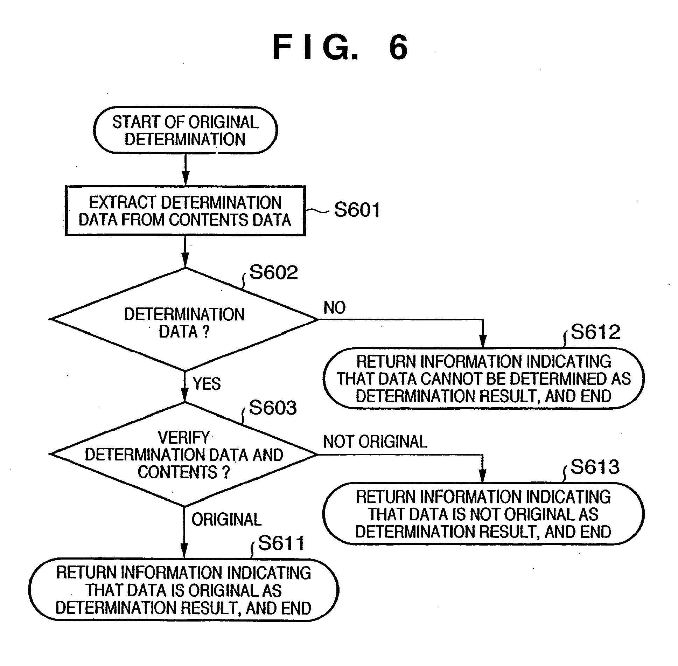

When it is determined in step S505 that the original determination result is absent, the contents site 105 determines in step S506 whether the contents data is an original on the basis of the contents data obtained in step S503. Note that the detail of the original determination process of the contents data will be described with reference to Fig. 6.

In step S507, a new record is then generated in the original determination result table 400 of the information database 118. The original determination result determined in step S506 is saved together with the contents ID 401 as the original determination result 402 of the contents data.

In step S508, the PC application server 203 of the contents site 105 obtains the original determination result and information related to the contents data from the information database 118. The PC application server 203 generates display information for displaying the original determination result on the browser of the user PC 102 together with the contents data and information related to the contents data obtained in step S503. Then, the PC application server 203 transmits the generated display information to the Internet 104.

In step S509, the browser of the user PC 102 displays a contents browse window in accordance with the display information transmitted from the contents site 105 in step S508.

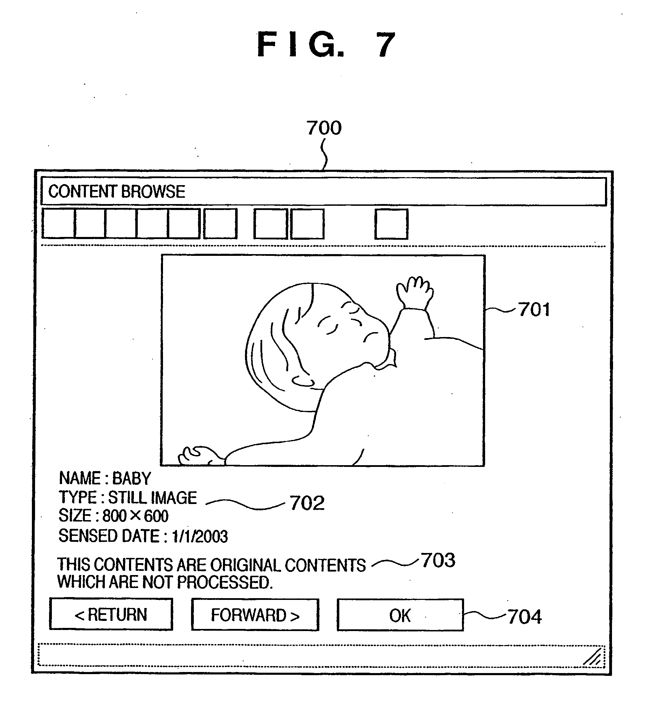

Fig. 7 shows an example of the contents browse window displayed on the browser of the user PC 102 in accordance with the display information transmitted in step S508. Fig. 7 shows the contents browse window displayed when it is determined that the contents data is an unprocessed original. On a contents browse window 700 in Fig. 7, the original determination result is displayed as "The contents are original contents which are not processed." 703 together with contents data 701, contents data information 702, operation section 704 which designates the operation, and the like.

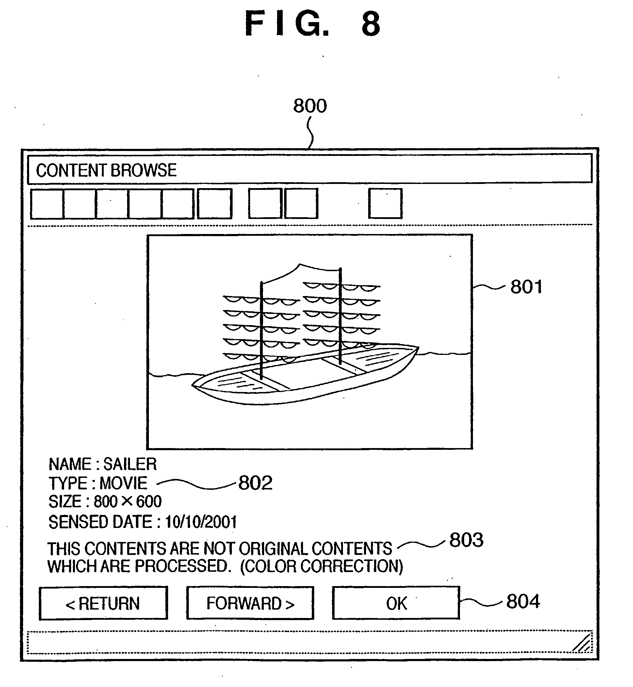

Fig. 8 shows an example of the contents browse window displayed on the browser of the user PC 102 in accordance with the information transmitted in step S508. Fig. 8 shows the contents browse window displayed when it is determined that the contents data is processed data, i.e., the contents data is not an original. On a contents browse window 800 in Fig. 8, the original determination result is displayed as "The contents are not original contents which are processed." 803 together with contents data 801, contents data information 802, operation section 804 which designates the operation, and the like. Additionally, the contents of processing given to contents data may be displayed in the display 803.

Note that since the display examples in Figs. 7 and 8 need only notify whether the contents data browsed by the user is an original, the present invention is not limited to the above examples.

Next, the original determination of the contents data performed in step S506 by the original determination module 120 of the contents site 105 will be described with reference to Fig. 6.

Note that the contents input device 101, e.g., a digital camera, senses an image to generate the original contents data of the digital image. The contents input device 101 then calculates the hash value of the original contents data, and encrypts the hash value by using a private key unique to the contents input device 101. The encrypted hash value is embedded in the original contents data in advance as the determination data.

In step S601, the determination data is extracted from the contents data to be original determined. In step S602, it is checked if the determination data has been extracted in step S601. If NO in step S602, information indicating that the contents data cannot be determined as an original is returned to the PC application server 203 in step S612. If YES in step S602, the flow advances to step S603.

In step S603, the determination data extracted in step S601 is decrypted by the public key. The hash value of the contents data to be original determined is calculated. The decrypted determination data and the calculated hash value are verified, and determined if the determination data agrees with the hash value. If the determination data does not agree with the hash value, it is determined that the target contents data is not an original. In step S613, information indicating that the contents data is not an original is returned to the PC application server 203 as the determination result. When the determination data agrees with the hash value, it is determined that the target contents data is an original. In step S611, information indicating that the contents data is an original is returned to the PC application server 203 as the determination original.

Note that in the present invention, upon receiving the browse service request from the user PC 102, the original determination module determines whether the contents data is an original. However, the present invention is not limited to this. When the contents data is uploaded from the user PC 102A to the contents site 105, the original determination module may automatically determine whether the contents data is an original.

Alternatively, the original determination module 120 of the contents site 105 holds the public key corresponding to the private key held by each contents input device 101. In the public key cryptography, the information encrypted by the private key is decrypted by the public key corresponding to the private key.

In this embodiment, the encryption of the public key cryptography is used. However, the cryptography of the present invention is not limited to this. For example, the present invention can be also applied to the encryption performed by a secret key cryptography using an SSL protocol.

In this embodiment, when providing the browse service to all users, the original determination service of the contents data is performed. However, the present invention is not limited to this. The original determination service may be provided to only users who have been granted to browse upon special applications.

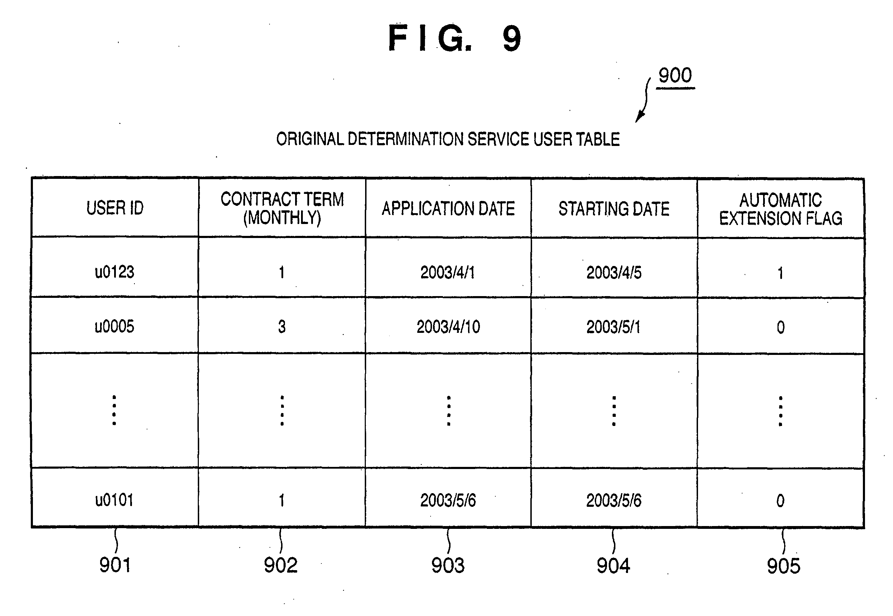

More specifically, the user applies to use the original determination service to the operator of the photo site 105 with the WEB using a browser, telephone, or mail. Then, the photo site 105 generates a new record on the original determination service user table (as shown in Fig. 9) stored in the information DB 118. The applied contents are registered in a user ID 901, contract term (monthly) 902, an application date 903, a starting date 904, and an automatic extension flag 905. On the basis of the user ID included in the service request received from the user PC 102 in step S501 in Fig. 5, an original determination service user table 900 is searched. If the corresponding record is present, the process after step S503 is performed. If the correspond record is absent, the contents data is obtained from the contents DB 117 in step S503, and the information related to the contents data is obtained from the information database 118. The display information for displaying the obtained contents data and the information related to the contents data on the browser of the user PC 102 is generated. After that, the generated display information is controlled for transmission to the Internet 104 and display on the user PC 102. Note that the automatic extension flag 905 of the original determination service user table 900 indicates whether the contract term is automatically extended after a contract term of the service has elapsed.

In this embodiment, the browse service of the image contents uploaded from the PC 102 to the contents site 105 via the Internet 104 has been embodied. However, the present invention discloses the system arrangement in which the user can check whether the contents provided to the user via the network are an original, i.e., the contents are not processed. It is obvious that the present invention is not limited to the above-described system, brose service, or image contents. The present invention obviously incorporates any other services.

For example, in this embodiment, the contents data and the original determination result of the contents data are displayed in the browse service. However, the present invention is not limited to this. The original determination of this embodiment may be applied, and the present invention may control whether the browse service is provided in accordance with the original determination result. More specifically, the contents site 105 so controls as to receive the contents data browse request from the user PC 102, and determine whether the contents data is an original. If it is determined that the contents data is an original, the contents site 105 so controls as to provide the contents data browse service. If it is determined that the contents data is not an original, the contents site 105 so controls as not to provide the contents data browse service. Also, the contents site 105 may notify the user PC 102 that the browse service cannot be provided because the contents data is not an original.

For example, other than the browse service, the original determination of this embodiment may be applied to the contents print service. The contents site 105 may receive the contents print order request from the user PC 102, and determine whether the contents data is an original. Then, the contents site 105 may control whether the print order is received in response to the original determination result. More specifically, the contents site 105 is connected to the print site 109 via the Internet 104. If it is determined that the contents data is an original, the contents site 105 so controls as to transfer the contents data and the print order to the print site 109, and to request to print the contents by the printer 111. Alternatively, when it is determined that the contents data is not an original, the contents site 105 so controls as not to receive the print order, and not to transfer the print order to the print site 109. The contents site 105 may notify the user PC 102 that the print order service cannot be received because the contents data is not an original.

The original determination of this embodiment can be applied to make the provided service contents different in accordance with the original determination result. For example, the contents site 105 may control to receive the contents print order from the user PC 102, and determine whether the contents data is an original. The contents site 105 may control to change the print condition setting in accordance with the original determination result. More specifically, if it is determined that the contents data is an original, the contents site 105 selects an output medium of A4-sized plain paper, plain postcard, and mug cup. If it is determined that the contents data is not an original, the contents site 105 can select only a postcard for an inkjet printer. As described above, the contents site 105 can change the service contents to be provided.

In this embodiment, the determination data indicating that the contents data is an original in the contents data transferred by the contents input device 101. The present invention is not limited to this. The determination data may be embedded in the contents data obtained from the contents input device 101 by the determination data setting device which embeds the determination data in the designated contents data.

In this embodiment, the original determination result is saved in the original determination result table 400 of the information database 118, and the original result of the contents data determined as an original is obtained with reference to the original determination result table 400. However, the present invention is not limited to this. The contents data determined as an original may be always original determined. In this manner, by always performing the original determination, when the number of standards or schemes for the original determination increases, the user can easily deal with the change by changing the original determination performed in Fig. 6.

Additionally, the original determination is displayed for each contents data. However, it is obvious that the original determination can be displayed for each folder including the plurality of contents data.

In this embodiment, the user uses the PC 102 when the browse service is provided. However, it is obvious that the present invention can be applied to the system in which the user uses the portable terminal 113.

Furthermore, the contents data saved in the contents site 105 are image data such as a still image or moving image. However, it is obvious that the other contents data such as document data or audio data can be used.

Further, the object of the present invention can also be achieved by providing a storage medium (or recording medium) storing program codes for implementing the aforesaid function of the above embodiments to a system or device, reading the program codes, by a computer(CPU or MPU) of the system or device, from the storage medium, then executing the program. In this case, the program codes read from the storage medium realize the functions according to the embodiments, and storage medium storing the program codes constitutes the invention. Furthermore, besides aforesaid functions according to the above embodiment are realized by executing the program codes which are read by a computer, the present invention includes a case where an OS (operating system) or the like working on the computer performs a part or entire processes in accordance with designations of the program codes and realizes functions according to the above embodiments.

Furthermore, the present invention also includes a case where, after the program codes read form the storage medium are written in a function expansion card which is inserted into the computer or tin a memory provided in a function expansion unit which is connected to the computer, CPU or the like contained in the function expansion card or unit performs a part or entire process in accordance with designations of the program codes and realizes functions of the above embodiments.

When the present invention is applied to the above-described storage medium, the storage medium stores program codes including the program codes corresponding to the above-described flowcharts.

## Claims

1. A Web site apparatus comprising:
a reception unit (106, 207) adapted to communicate with a plurality of communication terminals (102) and receive contents data from one of the communication terminals (102A);
a save unit (117, 209) adapted to save the contents data; and
a transmission unit (203, 204) adapted to transmit the contents data to one of the communication terminals (102B), in response to a request from the communication terminal (102B), **characterized in** further comprising:
a determination unit (S506, S603) adapted to determine whether the requested contents data is an original, by comparing determination data embedded in the contents data with a value calculated from the contents data;
a storage unit (S507, 113, 400) adapted to store the determination result in association with the contents data; and
a search unit (S505) adapted to search the determination result of the contents data when a request for the contents data is received from the one of the terminals (102B), and
wherein the determination unit (S506) is adapted to perform the determination process when the search unit has not found the determination result of the contents data, and the transmission unit (S508) is adapted to transmit the determination result of the contents data to the communication terminal (102B) together with the contents data in response to the request.

2. A method of processing information comprising the steps of:
receiving contents data at a Web site apparatus (105) from one of a plurality of communication terminals (102A);
a saving step of saving the received contents data; and
a transmission step (S508) of transmitting the contents data to another of the communication terminals (102B), in response to a request from said another communication terminal (102B) , **characterized in** further comprising:
a determination step (S506, S603) of determining whether the contents data is an original, by comparing determination data embedded in the received contents data with a value calculated from the contents data;
a storing step (S507, 113, 400) of storing the determination result in association with the received contents data; and
a searching step (S505) of searching a determination result in respect of the contents data when a request for the contents data is received from said another communication terminal (102B),
wherein in the determination step (S506), the determination process is performed when the determination result of the contents data cannot be found in the searching step, and transmitting (S508) the determination result of the contents data to said other communication terminal (102B) together with the contents data in response to the request.

3. A method according to claim 2, wherein the said determining step is performed on the basis of determination data extracted from the contents data.

4. A method according to claim 2, wherein the said determining step is performed on the basis of whether or not a value added to the contents data is equal to a value calculated by performing a predetermined calculation to the contents data.

5. A method according to any one of claims 2, 3 or 4, wherein said communication terminal has a Web browser function, and said determining step further comprises a step of generating the determination result information on the basis of a page description language which can be analysed by the Web browser function.

6. A program executable in an information processing apparatus for performing an information processing method of holding contents data received at a Web site apparatus via a network, comprising:
a determination module for determining whether the contents data is an original;
a storage module for storing the determination result;
a reception module for receiving via the network an acquisition request for the contents data from a communication terminal; and
a transmission module for transmitting the determination result to the communication terminal which requested the contents data together with the contents data in response to the acquisition request.

7. A storage medium storing a computer-readable program for causing an electronic processor to carry out all of the steps of any one of claims 2 to 5.

## Patentansprüche

1. Webseiten-Vorrichtung, umfassend:
eine Empfangseinheit (106, 207), ausgebildet zum Kommunizieren mit einer Mehrzahl Kommunikationsterminals (102) und zum Empfangen von Inhaltsdaten von einem der Kommunikationsterminals (102A);
eine Aufbewahrungseinheit (117, 209), ausgebildet zum Aufbewahren der Inhaltsdaten; und
eine Sendeeinheit (203, 204), ausgebildet zum Senden der Inhaltsdaten zu einem der Kommunikationsterminals (102B), ansprechend auf eine Anforderung seitens des Kommunikationsterminals (102B),
**gekennzeichnet durch** als des weiteren umfassend:
eine Bestimmungseinheit (S506, S603), ausgebildet zum Bestimmen, ob die angeforderten Inhaltsdaten ein Original sind, indem in die Inhaltsdaten eingebettete Bestimmungsdaten mit einem aus den Inhaltsdaten berechneten Wert verglichen werden;
eine Speichereinheit (S507, 113, 400), ausgebildet zum Speichern des Bestimmungsergebnisses in Zuordnung zu den Inhaltsdaten; und
eine Sucheinheit (S505), ausgebildet zum Suchen des Bestimmungsergebnisses der Inhaltsdaten, wenn eine Anforderung für die Inhaltsdaten von einem der Terminals (102B) empfangen wird, und
wobei die Bestimmungseinheit (S506) dazu ausgebildet ist, den Bestimmungsprozess auszuführen, wenn die Sucheinheit das Bestimmungsergebnis der Inhaltsdaten nicht gefunden hat, und wobei die Sendeeinheit (S508) dazu ausgebildet ist, das Bestimmungsergebnis der Inhaltsdaten an das Kommunikationsterminal (102B) zusammen mit den Inhaltsdaten, ansprechend auf die Anforderung, zu senden.

2. Verfahren zum Verarbeiten von Information, umfassend folgende Schritte:
Empfangen von Inhaltsdaten an einer Webseiten-Vorrichtung (105) von einem einer Mehrzahl Kommunikationsterminals (102A);
einen Aufbewahrungsschritt zum Aufbewahren der empfangenen Inhaltsdaten; und
einen Sendeschritt (S508) zum Senden der Inhaltsdaten zu einem anderen der Kommunikationsterminals (102B), ansprechend auf eine Anforderung von dem anderen Kommunikationsterminal (102B),
**gekennzeichnet durch** als des weiteren umfassend:
einen Bestimmungsschritt (S506, S603) zum Bestimmen, ob die Inhaltsdaten ein Original sind, indem in die empfangenen Inhaltsdaten eingebettete Bestimmungsdaten verglichen werden mit einem aus den Inhaltsdaten berechneten Wert;
einen Speicherschritt (S507, 113, 400) zum Speichern des Bestimmungsergebnisses in Zuordnung zu den empfangenen Inhaltsdaten; und
einen Suchschritt (S505) zum Suchen eines Bestimmungsergebnisses bezüglich der Inhaltsdaten, wenn eine Anforderung für die Inhaltsdaten von dem anderen Kommunikationsterminal (102B) empfangen wird,
wobei in dem Bestimmungsschritt (S506) der Bestimmungsprozess ausgeführt wird, wenn das Bestimmungsergebnis der Inhaltsdaten in dem Suchschritt nicht gefunden werden kann, und wobei das Bestimmungsergebnis der Inhaltsdaten zu dem anderen Kommunikationsterminal (1 02B) zusammen mit den Inhaltsdaten, ansprechend auf die Anforderung, gesendet (S508) wird.

3. Verfahren nach Anspruch 2,
bei dem der Bestimmungsschritt auf der Grundlage der aus den Inhaltsdaten extrahierten Bestimmungsdaten ausgeführt wird.

4. Verfahren nach Anspruch 2,
bei dem der Bestimmungsschritt, basierend darauf ausgeführt wird, ob ein zu den Inhaltsdaten addierter Wert gleich ist einem Wert, berechnet durch Ausführen einer vorbestimmten Berechnung bezüglich der Inhaltsdaten.

5. Verfahren nach einem der Ansprüche 2, 3 oder 4,
bei dem das Kommunikationsterminal eine Web-Browserfunktion aufweist und der Bestimmungsschritt außerdem einen Schritt zum Generieren der Bestimmungsergebnisinformation auf der Grundlage einer Seitenbeschreibungssprache, die von der Web-Browserfunktion analysiert werden kann, umfasst.

6. Ein auf einer Informationsverarbeitungsvorrichtung ausführbares Programm zur Ausführung eines Informationsverarbeitungsverfahrens zum Halten von Inhaltsdaten, die an einer Webseiten-Vorrichtung über ein Netzwerk empfangen werden, umfassend:
ein Bestimmungsmodul zum Bestimmen, ob die Inhaltsdaten ein Original sind; ein Speichermodul zum Speichern des Bestimmungsergebnisses;
ein Empfangsmodul zum Empfangen einer Bezugsanforderung für die Inhaltsdaten von einem Kommunikationsterminal über das Netzwerk; und
ein Sendemodul zum Senden des Bestimmungsergebnisses zu dem Kommunikationsterminal, welches die Inhaltsdaten angefordert hat, zusammen mit den Inhaltsdaten als Antwort auf die Bezugsanforderung.

7. Speichermedium zum Speichern eines computerlesbaren Programms zwecks Veranlassung eines elektronischen Prozessors, sämtliche Schritte nach einem der Ansprüche 2 bis 5 auszuführen.

## Revendications

1. Appareil pour site Web comportant :
une unité de réception (106, 207) conçue pour communiquer avec de multiples terminaux de communication (102) et pour recevoir des données de contenu provenant de l'un des terminaux de communication (102A) ;
une unité de sauvegarde (117, 209) conçue pour sauvegarder les données de contenu ; et
une unité d'émission (203, 204) conçue pour transmettre les données de contenu à l'un des terminaux de communication (102B), en réponse à une demande provenant du terminal de communication (102B), **caractérisé en ce qu'**il comporte en outre :
une unité de détermination (S506, S603) conçue pour déterminer si les données de contenu demandées sont un original, en comparant des données de détermination incorporées dans les données de contenu à une valeur calculée à partir des données de contenu ;
une unité de stockage (S507, 113, 400) conçue pour stocker le résultat de la détermination en association avec les données de contenu ; et
une unité de recherche (S505) conçue pour rechercher le résultat de la détermination des données de contenu lorsqu'une demande portant sur les données de contenu est reçue de l'un des terminaux (102B), et
dans lequel l'unité de détermination (S506) est conçue pour effectuer le processus de détermination lorsque l'unité de recherche n'a pas trouvé le résultat de la détermination des données de contenu, et l'unité d'émission (S508) est conçue pour transmettre le résultat de la détermination des données de contenu au terminal de communication (102B) en même temps que les données de contenu en réponse à la demande.

2. Procédé de traitement d'informations comprenant les étapes qui consistent en :
une étape de réception à un appareil (105) de site Web des données de contenu en provenance de l'un de multiples terminaux de communication (102A) ;
une étape de sauvegarde consistant à sauvegarder les données de contenu reçues ; et
une étape d'émission (S508) consistant à transmettre les données de contenu à un autre des terminaux de communication (102B), en réponse à une demande provenant dudit autre terminal de communication (102B), **caractérisé en ce qu'**il comprend en outre :
une étape de détermination (S506, S603) consistant à déterminer si les données de contenu sont un original, en comparant des données de détermination incorporées dans les données de contenu reçues à une valeur calculée à partir des données de contenu ;
une étape de stockage (S507, 113, 400) consistant à stocker le résultat de la détermination en association avec les données de contenu reçues ; et
une étape de recherche (S505) consistant à rechercher un résultat de détermination en ce qui concerne les données de contenu lorsqu'une demande portant sur les données de contenu est reçue dudit autre terminal de communication (102B),
dans lequel, dans l'étape de détermination (S506), le processus de détermination est effectué lorsque le résultat de la détermination des données de contenu ne peut pas être trouvé dans l'étape de recherche, et le résultat de la détermination des données de contenu est transmis (S508) audit autre terminal de communication (102B) en même temps que les données de contenu en réponse à la demande.

3. Procédé selon la revendication 2, dans lequel ladite étape de détermination est effectuée sur la base de données de détermination extraites des données de contenu.

4. Procédé selon la revendication 2, dans lequel ladite étape de détermination est effectuée selon qu'une valeur ajoutée aux données de contenu est égale ou non à une valeur calculée en effectuant un calcul prédéterminé sur les données de contenu.

5. Procédé selon l'une quelconque des revendications 2, 3 et 4, dans lequel ledit terminal de communication comporte une fonction de navigateur Web, et ladite étape de détermination comprend en outre une étape de génération de l'information de résultat de la détermination sur la base d'une langue de description de page qui peut être analysée par la fonction de navigateur Web.

6. Programme exécutable dans un appareil de traitement d'informations pour mettre en oeuvre un procédé de traitement d'informations consistant à retenir des données de contenu reçues à un appareil de site Web en passant par un réseau, comportant :
un module de détermination destiné à déterminer si les données de contenu sont un original ;
un module de stockage destiné à stocker le résultat de la détermination ;
un module de réception destiné à recevoir par l'intermédiaire du réseau une demande d'acquisition portant sur les données de contenu depuis un terminal de communication ; et
un module d'émission destiné à transmettre le résultat de la détermination au terminal de communication qui a demandé les données de contenu en même temps que les données de contenu en réponse à la demande d'acquisition.

7. Support de stockage stockant un programme lisible par ordinateur pour amener un processeur électronique à exécuter toutes les étapes selon l'une quelconque des revendications 2 à 5.
